# EUROPÄISCHE PATENTSCHRIFT

(11) **EP 1 224 230 B1**
(45) Veröffentlichungstag und Bekanntmachung des Hinweises auf die Patenterteilung: **19.05.2004**
(21) Anmeldenummer: 00975937.4
(22) Anmeldetag: 27.10.2000
(51) Int. Cl.: C08F 110/10, C08F 4/14, C08F 6/02, C08F 2/06

(54) **VERFAHREN ZUR HERSTELLUNG HOCHREAKTIVER POLYISOBUTENE**
METHOD FOR PRODUCING HIGHLY REACTIVE POLYISOBUTENES
PROCEDE POUR LA PRODUCTION DE POLYISOBUTENES HAUTEMENT REACTIFS

(30) Priorität: 28.10.1999 DE 19952031
(43) Veröffentlichungstag der Anmeldung: 24.07.2002
(73) Patentinhaber: BASF AKTIENGESELLSCHAFT, 67056 Ludwigshafen (DE)
(72) Erfinder: RATH, Hans, Peter, 67269 Grünstadt (DE); HAHN, Dieter, 67316 Carlsberg (DE); SANDROCK, Gerhard, 67227 Frankenthal (DE); VAN DEYCK, Frans, B-2190 Essen (BE); VANDER STRAETEN, Bart, B-3191 Hever (BE); DE VREE, Eddy, B-2940 Stabroek (BE)
(74) Vertreter: Kinzebach, Werner, Dr.
(86) Internationale Anmeldenummer: PCT/EP2000/010587
(87) Internationale Veröffentlichungsnummer: WO 2001/030868

(56) Entgegenhaltungen:
- EP-A- 0 628 575
- WO-A-96/40808
- WO-A-99/31151
- US-A- 5 408 018

## Beschreibung

Die Erfindung betrifft ein Verfahren zur kontinuierlichen Herstellung von Polyisobuten durch Polymerisation von Isobuten in Gegenwart eines Katalysators aus Bortrifluorid und wenigstens einem Cokatalysator in einem inerten organischen Lösungsmittel.

Hochmolekulare Polyisobutene mit Molekulargewichten bis zu mehreren 100.000 Dalton sind seit langem bekannt. Diese Polyisobutene werden meist mit Hilfe von Lewis-Säure-Katalysatoren, wie Aluminiumchlorid, Aluminiumalkylchloriden oder Bortrifluorid hergestellt und haben meist weniger als 10 Mol-% endständige Doppelbindungen (Vinylidengruppierungen) und eine Molekulargewichtsverteilung (Dispersität) zwischen 2 und 5.

Von diesen herkömmlichen Polyisobutenen sind die sogenannten hochreaktiven Polyisobutene zu unterscheiden, welche in der Regel mittlere Molmassen von 500 bis 5.000 Dalton und einen Gehalt an endständigen Vinylidengruppierungen von über 60 Mol-%, vorzugsweise über 80 Mol-%, haben. Unter endständigen Vinylidengruppierungen oder endständigen Doppelbindungen werden im Sinne der vorliegenden Anmeldung solche Doppelbindungen verstanden, deren Lage im Polyisobutenmakromolekül durch die allgemeine Formel 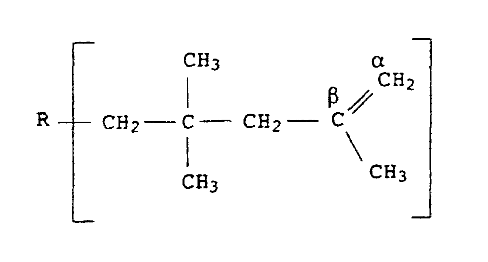 beschrieben wird, in der R für den um zwei Isobuteneinheiten verkürzten Polyisobutenrest steht. Die Art und der Anteil der im Polyisobuten vorhandenen Doppelbindungen kann mit Hilfe von ¹³C-NMR-Spektroskopie bestimmt werden. Solche hochreaktiven Polyisobutene werden als Zwischenprodukt zur Herstellung von Additiven für Schmier- und Kraftstoffe verwendet, wie sie beispielsweise in der DE-A 27 02 604 beschrieben sind. Die höchste Reaktivität zeigen die endständigen Vinylidengruppen, wohingegen die weiter im Inneren der Makromoleküle liegenden Doppelbindungen je nach ihrer Lage im Makromolekül zu keine oder nur eine geringe Reaktivität in den üblichen Funktionalisierungsreaktionen zeigen. Der Anteil an endständigen Vinylidengruppierungen im Molekül ist daher das wichtigste Qualitätskriterium für diesen Polyisobutentypus.

Weitere Qualitätskriterien für Polyisobutene sind deren mittleres Molekulargewicht und die Molekulargewichtsverteilung, auch als Dispersität bezeichnet, der im Polyisobuten enthaltenen Makromoleküle. Im Allgemeinen werden Polyisobutene mit mittleren Molekulargewichten (Mₙ) von 500 bis 50.000 Dalton angestrebt. Für die Herstellung von Kraftstoffadditiven verwendeten Polyisobutene werden wegen ihrer besseren Wirksamkeit Molekulargewichte von 500 bis 5.000, vorzugsweise 600 bis 3.000, insbesondere 700 bis 2.500 Dalton bevorzugt.

Weiterhin wird eine enge Molekulargewichtsverteilung der Polyisobutenmoleküle angestrebt, um den Anteil an unerwünschten, relativ nieder- oder hochmolekularen Polyisobutenen im erzeugten Produkt zurückzudrängen und so dessen Qualität zu verbessern.

Es sind vielfältige Polymerisationsreaktionen von Isobuten unter Katalyse verschiedener Bortrifluoridkomplexe bekannt.

In der EP 0 807 641 A2 wird ein Verfahren zur Herstellung von hochreaktivem Polyisobuten mit einem mittleren Molekulargewicht von mehr als 5.000 und bis 80.000 Dalton und einem Gehalt an endständigen Vinylidengruppen von wenigstens 50 Mol-% beschrieben. Die kationische Polymerisation von Isobuten oder isobutenhaltigen Kohlenwasserstoffen wird in flüssiger Phase in Gegenwart von Bortrifluorid-Komplex-Katalysatoren bei Temperaturen unterhalb von 0°C und einem Druck im Bereich von 0,5 bis 20 bar, und zwar einstufig bei einer stationären Isobutenkonzentration von 20 bis 80 Gew.-% geführt. Die Bortrifluorid-Komplex-Katalysatoren können vor ihrem Einsatz vorgeformt werden oder in situ im Polymerisationsreaktor erzeugt werden. Die Bortrifluoridkonzentration beträgt zwischen 50 bis 500 ppm.

In der EP 0 628 575 A1 wird ein Verfahren zur Herstellung hochreaktiver Polyisobutene mit einem Gehalt an endständigen Vinylidengruppierungen von über 80 Mol-% und einem mittleren Molekulargewicht von 500 bis 5.000 Dalton durch kationische Polymerisation von Isobuten oder isobutenhaltigen Kohlenwasserstoffen in flüssiger Phase in Gegenwart von Bortrifluorid und sekundären Alkoholen mit 3 bis 20 Kohlenstoffatomen polymerisiert. Neben einer separaten Herstellung des Bortrifluoridkomplexes mit nachfolgender Einleitung in den Reaktionsstrom wird auch eine Erzeugung des Komplexes in situ vorgeschlagen. Das Verfahren wird vorzugsweise unter Einstellung einer stationären Monomerkonzentration im Reaktionsmedium betrieben, die in der Regel im Bereich von 0,2 bis 50, vorzugsweise von 0,2 bis 5 Gew.-%, bezogen auf die gesamte Polymerisationsmischung, eingestellt wird.

In der WO 99/31151 wird ein Verfahren zur Herstellung von hochreaktivem niedermolekularem Polyisobuten beschrieben, bei dem man den Bortrifluorid-Komplex-Katalysator teilweise zurückgewinnt, indem man den Reaktoraustrag in eine produktreiche und eine katalysatorreiche Phase auftrennt und die katalysatorreiche Phase in den Polymerisationsreaktor zurückführt. Diese Vorgehensweise erschwert jedoch die Reaktionsführung.

Eine genaue Reaktionsführung ist jedoch im Hinblick auf die Produktqualität, insbesondere für die Einheitlichkeit des Molekulargewichts (d. h. für eine enge Molekulargewichtsverteilung) und einen hohen Gehalt an Vinylidendoppelbindungen erforderlich.

Aufgabe der Erfindung ist daher, ein kontinuierliches Verfahren zur Herstellung von Polyisobuten mit den gattungsbildenden Merkmalen des oberbegriffs des Anspruchs 1 zur Verfügung zu stellen, bei dem eine genauere Reaktionsführung möglich ist.

Diese Aufgabe wird gelöst durch ein Verfahren zur kontinuierlichen Herstellung von Polyisobuten durch Polymerisation von Isobuten in Gegenwart eines Katalysators aus Bortrifluorid und wenigstens einem Cokatalysator in einem inerten organischen Lösungsmittel, wobei man
a) einen Teil der dabei erhaltenen Reaktionsmischung kontinuierlich aus dem Polymerisationsreaktor austrägt,
b) den Katalysator aus dem Austrag abtrennt und/oder im Austrag deaktiviert,
c) das Lösungsmittel und gegebenenfalls nicht umgesetztes Isobuten vom Austrag abdestilliert und in den Polymerisationsreaktor zurückführt,
das dadurch gekennzeichnet ist, dass das abdestillierte Lösungsmittel und gegebenenfalls das Isobuten vor der Rückführung in den Polymerisationsreaktor einer Wäsche mit Wasser unterworfen und gegebenenfalls anschließend getrocknet wird.

Die Abtrennung des Lösungsmittels und des gegebenenfalls nicht umgesetzten Isobutens aus dem Austrag erfolgt durch Abdestillieren des Lösungsmittels, wobei Isobuten und andere flüchtige Bestandteile mit abdestillieren. Durch die erfindungsgemäße Wäsche des Lösungsmittels mit Wasser vor der Rückführung werden die Reste von wasserlöslichen Cokatalysatoren, sowie noch vorhandene Spuren von fluorhaltigen Zersetzungsprodukten auf einfache Weise und mit hoher Wirksamkeit entfernt.

Die wäsche des Lösungsmittels vor Rückführung kann einstufig oder mehrstufig durchgeführt werden. Bei einstufiger Durchführung wird man in der Regel das aus dem Austrag abgetrennte Lösungsmittel in einem Mischer mit einer ausreichenden Menge Wasser versetzen und anschließend in einem Trenngefäß eine Phasentrennung durchführen. Zur mehrstufigen Wäsche können diese Vorgänge in Art einer Kaskade mehrfach wiederholt werden. Vorzugsweise wird die mehrstufige Wäsche in einer Extraktionskolonne durchgeführt.

Für die wäsche des Lösungsmittels wird man in der Regel ein Verhältnis von Lösungsmittel/Wasser im Bereich von 20:1 bis 1:2, insbesondere im Bereich von 10:1 bis 1:1 (v/v) wählen. Bei einer einstufigen Wäsche wird das Verhältnis von Lösungsmittel zu Wasser besonders bevorzugt bei etwa 1:1 (v/v) liegen; bei einer mehrstufigen Wäsche bzw. bei der Extraktion mit einer Extraktionskolonne wird das Verhältnis Lösungsmittel/Wasser vorzugsweise Werte von 2:1 nicht unterschritten und vorzugsweise im Bereich von 2:1 bis 10:1 liegen.

Die Wäsche wird in der Regel bei Temperaturen im Bereich von 5 bis 80°C, vorzugsweise 10 bis 50°C, durchgeführt. Geeignet ist auch eine Druckwäsche.

Das bei der Wäsche des Lösungsmittels (und gegebenenfalls des nicht umgesetzten Isobutens) anfallende Waschwasser kann als Abwasser abgeführt werden. Da die Belastung des Waschwassers durch Reste von wasserlöslichen Cokatalysatoren sowie fluorhaltigen Zersetzungsprodukten vergleichsweise gering ist, kann das Waschwasser mit Vorteil einer weiteren Verwendung im erfindungsgemäßen verfahren zugeführt werden, bevor es als Abwasser entsorgt wird. Das Waschwasser ist beispielsweise geeignet zur Deaktivierung des Katalysators im Reaktionsaustrag unter gleichzeitiger Extraktion der Katalysatorzersetzungsprodukte aus dem Reaktionsaustrag, wie dies weiter unten näher beschrieben ist. Diese Zweitverwendung des waschwassers führt einerseits zu einer Einsparung von Frischwasser und einer Verminderung der Abwassermenge des Gesamtverfahrens. Ein weiterer Vorteil besteht in der Verringerung von Lösungsmittel- und Isobutenverlusten, die darauf zurückzuführen sind, dass das Lösungsmittel sowie Isobuten in geringem Umfang in Wasser löslich sind. Da das Waschwasser nach der Wäsche des rückgeführten Lösungsmittels (und gegebenenfalls Isobutens) bereits mit Lösungsmittel (und gegebenenfalls Isobuten) gesättigt ist, erfolgt in der Stufe der Katalysatordeaktivierung kein weiterer Übertritt von Lösungsmittel und gegebenenfalls Isobuten in die Waschwasserphase, so dass die Verluste von Lösungsmittel und gegebenenfalls Isobuten über das Abwasser verringert sind.

Nach Abtrennung des Lösungsmittels wird der Rückstand, der das gewünschte Polyisobuten enthält, in üblicher Weise aufgearbeitet. Hierzu unterwirft man den Rückstand beispielsweise weiteren Waschstufen mit Wasser oder alkoholischen Lösungsmitteln, z. B. Methanol, oder Lösungsmittel/Wasser-Gemischen, um Katalysatorrückstände zu entfernen. Lösungsmittel- und Wasserspuren sowie flüchtige Oligomere des Isobutens werden nach üblichen Methoden, beispielsweise durch Ringspaltverdampfung oder durch Strangentgasung, entfernt.

Das erfindungsgemäße Verfahren ist ein kontinuierliches Verfahren. Maßnahmen zur kontinuierlichen Polymerisation von Isobuten in Gegenwart von Katalysatoren aus Bortrifluorid und wenigstens einem Cokatalysator in inerten organischen Lösungsmitteln zu Polyisobuten sind an sich bekannt. Bei einem kontinuierlichen Verfahren wird kontinuierlich ein Teil der im Polymerisationsreaktor entstandenen Reaktionsmischung ausgetragen. Selbstredend wird eine dem Austrag entsprechende Menge an Einsatzmaterialien dem Polymerisationsreaktor kontinuierlich zugeführt. Das Verhältnis von der im Polymerisationsreaktor befindlichen Stoffmenge zu der Menge, die ausgetragen wird, bestimmt sich durch das Umlauf/Zulauf-Verhältnis, das bei der kontinuierlichen Polymerisation von Isobuten zu Polyisobuten in der Regel im Bereich von 1 000:1 bis 1:1, erfindungsgemäß bevorzugt im Bereich von 500:1 bis 5:1 und insbesondere im Bereich von 50:1 bis 200:1 v/v liegt. Die mittlere Verweildauer des zu polymerisierenden Isobutens im Polymerisationsreaktor kann 5 Sekunden bis mehrere Stunden betragen. verweilzeiten von 1 bis 30 min, insbesondere 2 bis 20 min sind bevorzugt. Die Polymerisation des Isobutens erfolgt in den für die kontinuierliche Polymerisation üblichen Reaktoren, wie Rührkesseln, Rohr-, Rohrbündel- und Schlaufenreaktoren, wobei Schlaufenreaktoren, d.h. Rohr(bündel)reaktoren mit Rührkesselcharakteristik, bevorzugt sind. Besonders günstig sind dabei Rohrreaktoren mit Rohrquerschnitten, die in Teilbereichen zu Turbulenzen führen.

Das erfindungsgemäße Verfahren wird in der Regel bei einer Polymerisationstemperatur im Bereich von -60°C bis +40°C, vorzugsweise unterhalb 0°C, besonders bevorzugt im Bereich von -5°C bis -40°C und speziell im Bereich von -10°C bis -30°C durchgeführt. Die Polymerisationswärme wird entsprechend mit Hilfe einer Kühlvorrichtung abgeführt. Diese kann beispielsweise mit flüssigem Ammoniak als Kühlmittel betrieben werden. Eine andere Möglichkeit, die Polymerisationswärme abzuleiten, ist die Siedekühlung. Dabei wird die freiwerdende Wärme durch Verdampfen des Isobutens und/oder anderer leichtflüchtiger Bestandteile des Isobuten-Feedstocks oder des gegebenenfalls leichtflüchtigen Lösungsmittels abgeführt. Vorzugsweise arbeitet man im erfindungsgemäßen Polymerisationsverfahren unter isothermen Bedingungen, d.h. die Temperatur der flüssigen Reaktionsmischung im Polymerisationsreaktor hat einen stationären Wert und ändert sich während des Betriebs des Reaktors nicht oder nur in geringem Maße.

Die Konzentration des Isobutens in der flüssigen Reaktionsphase liegt in der Regel im Bereich von 0,2 bis 50 Gew.-%, vorzugsweise im Bereich von 0,5 bis 20 Gew.-% und insbesondere im Bereich von 1 bis 10 Gew.-%, bezogen auf die flüssige Reaktionsphase. Bei der Herstellung von Polyisobutenen mit zahlenmittleren Molekulargewichten Mₙ im Bereich von 500 bis 5.000 Dalton arbeitet man vorzugsweise bei einer Isobutenkonzentration im Bereich von 1 bis 20 Gew.-% und insbesondere im Bereich von 1,5 bis 15 Gew.-%. Bei der Herstellung von Polyisobutenen mit einem zahlenmittleren Molekulargewicht Mₙ oberhalb 5.000 Dalton arbeitet man bevorzugt bei einer Isobutenkonzentration im Bereich von 4 bis 50 Gew.-%.

Der Isobutenumsatz kann prinzipiell beliebig eingestellt werden. Es versteht sich aber von selbst, dass bei sehr niedrigen Isobutenumsätzen die Wirtschaftlichkeit des Verfahrens in Frage gestellt ist, wohingegen bei sehr hohen Isobutenumsätzen von mehr als 99% die Gefahr von Doppelbindungsverschiebungen immer größer wird und kürzere Reaktionszeiten und eine verbesserte Wärmeabfuhr erforderlich werden. Üblicherweise wird der Isobutenumsatz aus diesen Gründen bis zu Werten im Bereich von 20% bis 99% geführt. Besonders bevorzugt sind Isobutenumsätze im Bereich von 70% bis 98%.

Als Einsatzstoffe für das erfindungsgemäße Verfahren eignen sich sowohl Isobuten selber als auch Isobuten-haltige C₄-Kohlenwasserstoffströme, beispielsweise C₄-Raffinate, C₄-Schnitte aus der Isobuten-Dehydrierung, C₄-Schnitte aus Steamcrackern, FCC-Crackern (FCC: Fluid Catalysed Cracking), sofern sie weitgehend von darin enthaltenen 1,3-Butadien befreit sind. Erfindungsgemäß geeignete C₄-Kohlenwasserstoffströme enthalten in der Regel weniger als 500 ppm, vorzugsweise weniger als 200 ppm Butadien. Die Anwesenheit von Buten-1, cis- und trans-Buten-2 ist für das erfindungsgemäße Verfahren weitgehend unkritisch und führt nicht zu Selektivitätsverlusten. Typischerweise liegt die Konzentration in den C₄-Kohlenwasserstoffströmen im Bereich von 40 bis 60 Gew.-%. Bei Einsatz von C₄-Schnitten als Einsatzmaterial übernehmen die von Isobuten verschiedenen Kohlenwasserstoffe die Rolle eines inerten Lösungsmittels. Der Isobuten-Feedstock kann geringe Mengen an Kontaminanten wie Wasser, Carbonsäuren oder Mineralsäuren enthalten, ohne dass es zu kritischen Ausbeute- oder Selektivitätseinbrüchen bei der Polymerisation kommt. Dies bewirkt einen geringeren Alkohol/Etherverbrauch, der die vorgenannten Molverhältnisse zugunsten von BF₃ verändert. Es ist zweckdienlich, eine Anreicherung dieser Verunreinigungen in der Anlage zu vermeiden, indem man solche Schadstoffe beispielsweise durch Adsorption an festen Adsorbentien, wie Aktivkohle, Molekularsiebe oder Ionenaustauscher aus dem isobutenhaltigen Feedstock entfernt.

Für das erfindungsgemäße Verfahren sind solche Lösungsmittel oder Lösungsmittelgemische geeignet, die gegenüber den eingesetzten Reagenzien inert sind. Geeignete Lösungsmittel sind beispielsweise gesättigte Kohlenwasserstoffe, wie Butan, Pentan, Hexan, Heptan, Oktan z.B. n-Hexan, i-Oktan, cyclo-Butan oder cyclo-Pentan, halogenierte Kohlenwasserstoffe wie Methylchlorid, Dichlormethan oder Trichlormethan sowie Mischungen der vorgenannten Verbindungen. vorzugsweise werden die Lösungsmittel vor ihrem Einsatz im erfindungsgemäßen Verfahren von Verunreinigungen wie Wasser, Carbonsäuren oder Mineralsäuren befreit, beispielsweise durch Adsorption an festen Adsorbentien, wie Aktivkohle, Molekularsieben oder Ionenaustauschern.

Im erfindungsgemäßen Verfahren wird die Polymerisation in Gegenwart von Bortrifluorid-Komplexkatalysatoren durchgeführt. Hierunter versteht man Katalysatoren aus Bortrifluorid und wenigstens einem Cokatalysator. Geeignete Cokatalysatoren sind in der Regel sauerstoffhaltige Verbindungen. Geeignete sauerstoffhaltige Verbindungen sind neben Wasser organische Verbindungen mit bis zu 30 Kohlenstoffatomen, die wenigstens ein an Kohlenstoff gebundenes Sauerstoffatom enthalten. Beispiele hierfür sind C₁-C₁₀-Alkanole und Cycloalkanole, C₂-C₁₀-Diole, C₁-C₂₀-Carbonsäuren, C₄-C₁₂-Carbonsäureanhydride sowie C₂-C₂₀-Dialkylether. Hierunter bevorzugt werden einwertige Alkanole mit 1 bis 20 C-Atomen, insbesondere mit 1 bis 4 C-Atomen, die gegebenenfalls zusammen mit den C₁-C₂₀-Dialkylethern eingesetzt werden können. Erfindungsgemäß bevorzugt werden in Bortrifluorid-Komplex-Katalysatoren Molverhältnisse von Bortrifluorid zu sauerstoffhaltiger Verbindung im Bereich von 1:1 bis 1:10, insbesondere im Bereich von 1:1,1 bis 1:5 und speziell im Bereich von 1:1,2 bis 1:2,5. Die BF₃-Konzentration im Reaktor wird man in der Regel im Bereich von 0,01 bis 1 Gew.-%, bezogen auf die flüssige Reaktionsphase, insbesondere im Bereich von 0,02 bis 0,7 Gew.-% und speziell im Bereich von 0,03 bis 0,5 Gew.-% variieren.

Im erfindungsgemäßen Verfahren umfasst die sauerstoffhaltige Verbindung im Bortrifluorid-Komplex-Katalysator besonders bevorzugt wenigstens einen einwertigen, sekundären Alkohol A mit 3 bis 20 Kohlenstoffatomen. Beispielhaft für geeignete sekundäre Alkohole seien die folgenden genannt: Isopropanol, 2-Butanol, sowie ferner sec.-Pentanole, sec.-Hexanole, sec.-Heptanole, sec.-Octanole, sec.-Nonanole, sec.-Decanole oder sec.-Tridecanole. Außer einwertigen, sekundären Alkoholen können auch (poly-)Etherole des Propen- und Butenoxids erfindungsgemäß verwendet werden. Bevorzugt wird 2-Butanol und insbesondere Isopropanol verwendet.

Die Bortrifluorid-Komplexe können in separaten Reaktoren vor ihrem Einsatz im erfindungsgemäßen Verfahren vorgebildet werden, nach ihrer Bildung zwischengelagert und je nach Bedarf in die Polymerisationsapparatur eindosiert werden. Die Herstellung der BF₃-Komplexkatalysatoren erfolgt in der Regel durch Einleiten von BF₃ in den Cokatalysator oder in eine Lösung des Cokatalysators in einem der vorgenannten inerten organischen Lösungsmittel bei Temperaturen im Bereich von -60 bis +60°C, vorzugsweise im Bereich von -30 bis +20°C. Dabei kann die Aktivität des Katalysators durch Zugabe weiterer Cokatalysatoren manipuliert werden.

Eine andere, bevorzugte Variante besteht darin, dass man die Bortrifluorid-Komplexe in situ in der Polymerisationsapparatur erzeugt. Bei dieser verfahrensweise wird der jeweilige Cokatalysator gegebenenfalls gemeinsam mit einem Lösungsmittel in die Polymerisationsapparatur eingespeist und Bortrifluorid in der erforderlichen Menge in dieser Mischung der Reaktanten dispergiert. Hierbei setzt sich das Bortrifluorid und der Cokatalysator zum Bortrifluorid-Komplex um. Anstelle eines zusätzlichen Lösungsmittels kann bei der in situ-Erzeugung des Bortrifluorid-Katalysator-Komplexes Isobuten oder die Reaktionsmischung aus nicht umgesetztem Isobuten und Polyisobuten als Lösungsmittel fungieren.

In einer bevorzugten Ausführungsform wird zunächst ein Komplex aus Dialkylether B und BF₃ getrennt oder im Lösemittelzulauf zum Reaktor hergestellt und erst dann im Komplexzulauf oder Lösemittelzulauf zum Reaktor oder erst im Reaktor mit dem sekundären Alkohol A zusammengebracht. Dadurch kann die Energie der Komplexbildung ohne schädliche Nebenproduktbildung bei der Erzeugung des Alkoholkomplexes abgeführt werden. Außerdem ermöglicht diese Vorgehensweise eine simple Manipulation der Katalysatoraktivität über das Verhältnis von Bortrifluorid zu Alkohol.

Als Rohstoff zur Herstellung der Bortrifluorid-Komplexe wird zweckmäßigerweise gasförmiges Bortrifluorid benutzt, wobei technisches, noch geringe Mengen Schwefeldioxid und SiF₄ enthaltenes (Reinheit: 96,5 Gew.-%), vorzugsweise aber hochreines Bortrifluorid (Reinheit: 99,5 Gew.-%) verwendet werden kann.

Die aus dem Polymerisationsreaktor ausgetragene Reaktionsmischung enthält noch polymerisierbares Isobuten, BF₃ und Cokatalysator. Daher schreitet in der Regel die Polymerisation auch im Austrag fort. Hierdurch kann sich das im Polymerisationsreaktor gebildete Polyisobuten nachteilig hinsichtlich Molekulargewicht, Molekulargewichtsverteilung und Endgruppengehalt verändern. Um eine weitere Reaktion zu verhindern, wird daher üblicherweise die Polymerisation durch Deaktivierung des Katalysators abgebrochen. Die Deaktivierung kann beispielsweise durch Zugabe von Wasser, Alkoholen, Acetonitril, Ammoniak oder wässrigen Lösungen von Mineralbasen oder durch Einleiten des Austrags in eines der vorgenannten Medien bewirkt werden. Bevorzugt ist die Deaktivierung mit Wasser, die vorzugsweise bei Temperaturen im Bereich von 1 bis 60°C (Wassertemperatur) durchgeführt wird. Bei der Deaktivierung mit Wasser erfolgt neben der Deaktivierung im engeren Wortsinn (durch Bildung eines katalytisch inaktiven BF₃-Wasser-Komplexes) eine Hydrolyse des Bortrifluorids zu wasserlöslichen Hydrolyseprodukten wie Borsäure und Fluorwasserstoff, die in die Wasserphase übertreten und so größtenteils aus der organischen Phase entfernt werden. Aus dem so deaktivierten Austrag wird gegebenenfalls nach Phasentrennung in eine organische und in eine wässrige Phase das Lösungsmittel vom Polyisobuten durch Verdampfen und Kondensieren bzw. durch kontrolliertes Abdestillieren abgetrennt und in der oben beschriebenen Weise weiterbehandelt.

In einer bevorzugten Ausführungsform des erfindungsgemäßen Verfahrens wird der Bortrifluorid-Komplex-Katalysator aus dem Austrag weitgehend abgetrennt und in die Polymerisationsreaktion zurückgeführt. Die Abtrennung und Rückführung des Katalysators aus dem Austrag der Polymerisationsreaktion ist aus der WO 99/31151 bekannt, auf die hiermit in vollem Umfang Bezug genommen wird. Zur Abtrennung des Katalysators aus dem Austrag verwendet man bevorzugt begrenzt lösliche Bortrifluorid-Komplex-Katalysatoren und/oder kühlt das Reaktionsgemisch auf Temperaturen von beispielsweise 5 bis 30 Kelvin unterhalb Reaktortemperatur, vorzugsweise 10 bis 20 Kelvin unterhalb Reaktortemperatur ab.

Bei der Abtrennung des Katalysators aus dem Reaktoraustrag empfiehlt es sich, zuvor die Isobutenkonzentration im Austrag auf Werte unterhalb 2 Gew.-%, vorzugsweise 1 Gew.-% und insbesondere unterhalb 0,5 Gew.-%, bezogen auf den Austrag, abzusenken. In der Regel wird man daher den Reaktoraustrag einer weiteren Polymerisationsstufe vor Abtrennung des Katalysators unterwerfen. Daher ist die in der WO 96/40808 beschriebene mehrstufige Polymerisation von Isobuten, bei der Restisobuten des Hauptreaktors auf ca. 0,5 % im Nachreaktor abreagiert, eine bevorzugte Fahrweise für das erfindungsgemäße Verfahren. Vorzugsweise wird diese zweite Polymerisationsstufe bei der gleichen Temperatur wie die erste Polymerisationsstufe oder bei einer niedrigeren Polymerisationstemperatur als die erste Polymerisationsstufe betrieben. In der Regel beträgt die Temperaturdifferenz dabei 0 bis 20 Kelvin, vorzugsweise 0 bis 10 Kelvin.

Durch die Nachreaktion, insbesondere die gekühlte Nachreaktion, kommt es zu einer verstärkten Komplexabscheidung. Die Löslichkeit des Komplexes fällt dabei um wenigstens eine 10er-Potenz, insbesondere, wenn dabei noch eine Temperaturabsenkung vorgenommen wird. Hierbei fällt der Katalysator in Form feinverteilter Tröpfchen an, die in der Regel rasch in eine kohärente Phase übergehen. Die Komplextröpfchen bzw. die kohärente Phase haben eine deutlich höhere Dichte als die Polymerlösung. Sie können daher in der Regel mit Hilfe von Abscheidern, Separatoren oder sonstigen Sammelbehältern von der polymerreichen, katalysatorarmen Produktphase abgetrennt werden. Sofern der Katalysator nur in Form feinstverteilter Tröpfchen anfällt, die sich schlecht abtrennen lassen, kann man sich üblicher Maßnahmen zur Tröpfchenvergrößerung, beispielsweise Koaleszierfilter, bedienen. Verfahren hierzu sind beispielsweise in der WO 99/31151 beschrieben.

Die Ausbildung einer kohärenten Katalysatorphase ist für eine Rückführung des Katalysators jedoch nicht zwingend. Auch eine Phase, in der der Komplex noch dispers verteilt ist, kann gegebenenfalls dem Reaktor zugeführt werden. Der angereicherte und/oder abgetrennte Katalysator wird dann in der Regel ohne weitere Reinigung der Polymerisation, bei einer mehrstufigen Polymerisation in der Regel der ersten Polymerisationsstufe, zugeführt. Da in der Regel gewisse Aktivitätsverluste bei der Abtrennung des Katalysators entstehen, wird dieser durch Zusatz von geringen Mengen an Katalysator, z.B. 1 bis 30 Gew.-%, vorzugsweise 3 bis 20 Gew.-% und insbesondere 5 bis 10 Gew.-%, bezogen auf die im graden Durchgang benötigten Anteile an Komplex, ausgeglichen. In der Regel ist es dadurch möglich, 40 bis 95%, vorzugsweise 70 bis 90% des Katalysators zurückzuführen.

Die dabei abgetrennte polymerreiche Produktphase ist im Allgemeinen homogen und enthält nur noch geringe Mengen löslicher Katalysatoranteile. Diese werden in der zuvor beschriebenen Weise, vorzugsweise mit Wasser, deaktiviert. Anschließend wird das Lösungsmittel in der zuvor beschriebenen weise vom Produkt abgetrennt und der erfindungsgemäßen Wäsche unterworfen. Auch ist es möglich, bei dieser Ausführungsform die Reste an gelöstem Komplex an nitrilhaltigen Materialien, z.B. gemäß EP-A-791 557 oder an nitrilmodifiziertem Kieselgel zu absorbieren.

Das erfindungsgemäße verfahren erlaubt eine gute Steuerung der Isobuten-Polymerisation und ermöglicht die gezielte Herstellung von hochreaktiven Polyisobutenen mit einem zahlenmittleren Molekulargewicht Mₙ im Bereich von 500 bis 50.000 Dalton bei einem Gehalt an Vinyliden-Endgruppen von wenigstens 60 Mol-%. Besonders bewährt hat sich das erfindungsgemäße Verfahren bei der Herstellung von Polyisobutenen mit einem zahlenmittleren Molekulargewicht Mₙ im Bereich von 500 bis 5.000, insbesondere im Bereich von 700 bis 2.500, und einem Gehalt an Vinylidengruppen von wenigstens 80 Mol-%, bezogen auf alle Endgruppen. Gleichzeitig wird eine bessere molekulare Einheitlichkeit des Polyisobutens, charakterisiert durch das Verhältnis von gewichtsmittlerem Molekulargewicht Mₙ (=Dispersizität D = M_{w}/Mₙ), erreicht. Typischerweise ermöglicht das erfindungsgemäße Verfahren die Herstellung von Polyisobutenen im angegebenen Molekulargewichtsbereich mit einem M_{w}/Mₙ ≤ 2,5, vorzugsweise ≤ 2,0 und insbesondere ≤ 1,8. Diese Werte werden im Unterschied zu den Verfahren des Standes der Technik auch bei Lösungsmittelrückführung erreicht. Auch sinkt im Unterschied zu den verfahren des Standes der Technik bei Lösungsmittelrückführung der Gehalt reaktiver Endgruppen nicht auf Werte unterhalb 60 Mol-%, vorzugsweise 80 Mol-% ab. Das Verfahren erlaubt insbesondere die Einhaltung der vorgenannten Qualitätsmerkmale für Polyisobuten mit Molekulargewichten im Bereich von 500 bis 5.000. Dies ist vermutlich auf eine bessere Steuerung der Polymerisation zurückzuführen, die möglicherweise bislang durch Katalysatorspuren und/oder Cokatalysatorspuren im rückgeführten Lösungsmittel erschwert wurde.

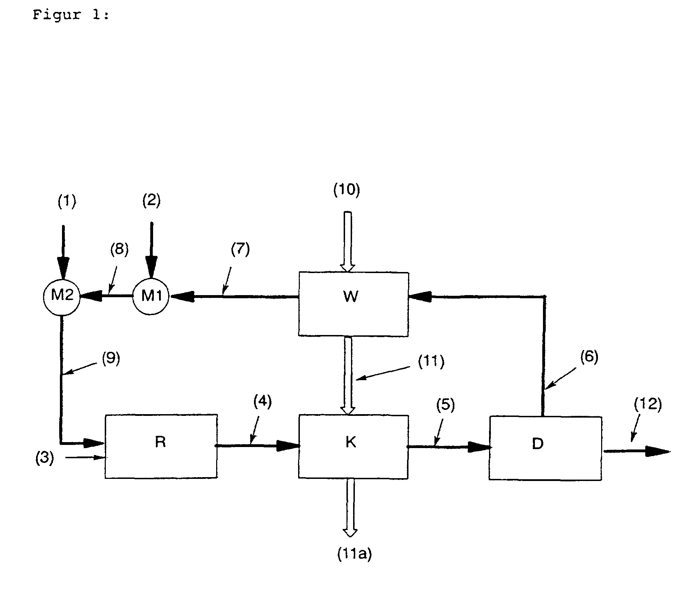

Das in Figur 1 angegebene Schema soll die Erfindung verdeutlichen, ohne sie jedoch einzuschränken.

Figur 1 gibt eine bevorzugte Ausführungsform des erfindungsgemäßen Verfahrens in Form eines Blockdiagramms wieder. Der durch destillative Aufarbeitung zurückgewonnene Lösungsmittelstrom (6) wird in einem Wäscher W einer erfindungsgemäßen Wäsche mit frischem Wasser (10) unterworfen. Dem so aufgearbeiteten Lösungsmittelstrom (7) wird in M1 frisches Lösungsmittel (2) und danach in M2 frisches Isobuten zugeführt. Der so erhaltene Strom (9) aus Lösungsmittel und Isobuten wird dem Reaktor R zugeführt. Parallel hierzu führt man dem Reaktor den Komplexkatalysator (3), wahlweise in Form von Bortrifluorid und Cokatalysator über getrennte Zuführungen oder in Form eines präformierten Katalysators zu. Der Reaktoraustrag (4) wird in einem Mischgefäß K zur Deaktivierung des Katalysators mit dem Waschwasser (11) der erfindungsgemäßen Wasserwäsche W versetzt. Das Waschwasser (11a) wird abgetrennt. Die produkthaltige organische Phase (5) wird einer Destillation (D) unterworfen, bei der die Hauptmenge des eingesetzten Lösungsmittels und gegebenenfalls weitere leicht flüchtige Bestandteile abgetrennt und als Lösungsmittelstrom (6) der erfindungsgemäßen Wäsche (W) zugeführt werden. Das Sumpfprodukt (12) der Destillation (D) besteht im wesentlichen aus Polyisobuten, das gegebenenfalls zur Entfernung schwerflüchtiger Komponenten noch einer Strangentgasung bei erhöhter Temperatur unterworfen wird (nicht dargestellt).

## Patentansprüche

1. Verfahren zur kontinuierlichen Herstellung von Polyisobuten durch polymerisation von Isobuten in Gegenwart eines Katalysators aus Bortrifluorid und wenigstens einem Cokatalysator in einem inerten organischen Lösungsmittel, wobei man
a) einen Teil der dabei erhaltenen Reaktionsmischung kontinuierlich aus dem Polymerisationsreaktor austrägt,
b) den Katalysator aus dem Austrag abtrennt und/oder im Austrag deaktiviert,
c) das Lösungsmittel und gegebenenfalls nicht umgesetztes Isobuten vom Austrag abdestilliert und in den Polymerisationsreaktor zurückführt,
**dadurch gekennzeichnet, dass** das abdestillierte Lösungsmittel und gegebenenfalls das Isobuten vor der Rückführung in den polymerisationsreaktor einer Wäsche mit Wasser unterworfen und gegebenenfalls anschließend getrocknet wird.

2. Verfahren nach Anspruch 1, **dadurch gekennzeichnet, dass** die Wäsche mit Wasser mehrstufig erfolgt.

3. Verfahren nach Anspruch 1 oder 2, **dadurch gekennzeichnet, dass** bei der Wäsche mit Wasser das Verhältnis von Lösungsmittel/wasser zwischen 1:1 und 1:0,1 gewählt ist.

4. Verfahren nach einem der vorhergehenden Ansprüche, **dadurch gekennzeichnet, dass** die ausgetragene Menge an Reaktionsmischung einem Umlauf/Zulauf-Verhältnis im Bereich von 1000:1 bis 10:1 entspricht.

5. Verfahren nach einem der vorhergehenden Ansprüche, **dadurch gekennzeichnet, dass** man zur Entfernung des Katalysators aus dem Austrag
b1) den Austrag in eine an Katalysator angereicherte Katalysatorphase und in eine an Polyisobuten und Lösungsmittel angereicherte Produktphase auftrennt und
b2) die Katalysatorphase gegebenenfalls nach Zugabe von Bortrifluorid und Cokatalysator wieder dem Reaktor zuführt.

6. Verfahren nach Anspruch 5, **dadurch gekennzeichnet, dass** der Restgehalt an Isobuten im Austrag weniger als 2 Gew.-% beträgt.

7. verfahren nach einem der Ansprüche 5 oder 6, **dadurch gekennzeichnet, dass** man die nach Abtrennung des Katalysators im Austrag verbliebenen Reste an Katalysator durch Zugabe von Wasser deaktiviert.

8. Verfahren nach einem der vorhergehenden Ansprüche, **dadurch gekennzeichnet, dass** das bei der Wäsche des Lösungsmittels anfallende waschwasser zur Deaktivierung und/oder Extraktion des Katalysators im Reaktionsaustrag verwendet wird.

9. Verfahren nach einem der vorhergehenden Ansprüche, **dadurch gekennzeichnet, dass** das Polyisobuten ein hochreaktives Polyisobuten mit einem mittleren Molekulargewicht Mₙ von 500 bis 5.000 Dalton und einem Gehalt von endständigen Doppelbindungen von über 80 Mol-% ist.

## Claims

1. A process for the continuous preparation of polyisobutene by polymerizing isobutene in the presence of a catalyst comprising boron trifluoride and at least one cocatalyst in an inert organic solvent, and
a) a part of the reaction mixture obtained thereby being discharged continuously from the polymerization reactor,
b) the catalyst being separated from the discharge and/or being deactivated in the discharge, and
c) the solvent and any unconverted isobutene being distilled off from the discharge and recycled to the polymerization reactor,
wherein the distilled-off solvent and, if present, the isobutene are subjected to a wash with water before the recycling to the polymerization reactor and, if required, are then dried.

2. A process as claimed in claim 1, wherein the wash with water is effected in a plurality of stages.

3. A process as claimed in claim 1 or 2, wherein, in the wash with water, the solvent/water ratio is chosen to be from 1:1 to 1:0.1.

4. A process as claimed in any of the preceding claims, wherein the discharged amount of reaction mixture corresponds to a circulation/feed ratio of from 1000:1 to 10:1.

5. A process as claimed in any of the preceding claims, wherein, to remove the catalyst from the discharge
b1) the discharge is separated into a catalyst-enriched catalyst phase and into a polyisobutene- and solvent-enriched product phase and
b2) the catalyst phase is recycled to the reactor, if required after addition of boron trifluoride and cocatalyst.

6. A process as claimed in claim 5, wherein the residual content of isobutene in the discharge is less than 2% by weight.

7. A process as claimed in either of claims 5 and 6, wherein the catalyst residues remaining in the discharge after the catalyst has been separated off are deactivated by adding water.

8. A process as claimed in any of the preceding claims, wherein the wash water produced during washing of the solvent is used to deactivate and/or extract the catalyst in the reaction discharge.

9. A process as claimed in any of the preceding claims, wherein the polyisobutene is a highly reactive polyisobutene having an average molecular weight Mₙ of from 500 to 5,000 Dalton and containing more than 80 mol% of terminal double bonds.

## Revendications

1. Procédé pour la production continue de polyisobutènes par la polymérisation d'isobutènes en présence d'un catalyseur de fluorure de bore et d'au moins un co-catalyseur dans un solvant organique inerte, dans lequel :
a) une partie du mélange réactionnel ainsi obtenu est entraîné de manière continue hors du réacteur de polymérisation,
b) le catalyseur est séparé de la solution entraînée et/ou désactivé dans la solution entraînée,
c) le solvant ainsi que, le cas échéant, des isobutènes non convertis de la solution entraînée sont séparés par distillation et recyclés dans le réacteur de polymérisation,
**caractérisé en ce que** le solvant séparé par distillation ainsi que, le cas échéant, l'isobutène sont soumis, avant le recyclage dans le réacteur de polymérisation, à un lavage à l'eau et sont ensuite, le cas échéant, séchés.

2. Procédé selon la revendication 1, **caractérisé en ce que** le lavage à l'eau a lieu à plusieurs niveaux.

3. Procédé selon la revendication 1 ou 2, **caractérisé en ce que** le rapport solvant/eau au cours du lavage à l'eau est choisi entre 1:1 et 1:0,1.

4. Procédé selon l'une quelconque des revendications précédentes, **caractérisé en ce que** la quantité entraînée dans le mélange réactionnel correspond à un rapport circulation/alimentation allant de 1000:1 à 10:1.

5. Procédé selon l'une quelconque des revendications précédentes, **caractérisé en ce que**, dans le but d'éliminer le catalyseur de la solution entraînée :
b1) la solution entraînée est séparée dans une phase catalytique enrichie par un catalyseur et dans une phase produit enrichie par des polyisobutènes et un solvant, et
b2) la phase catalytique est reconduite, le cas échéant, après l'ajout de fluorure de bore et du co-catalyseur, au réacteur.

6. Procédé selon la revendication 5, **caractérisé en ce que** la teneur résiduelle en isobutènes dans la solution entraînée s'élève à moins de 2 % en poids.

7. Procédé selon l'une des revendications 5 ou 6, **caractérisé en ce que** les restes au niveau du catalyseur dans la solution entraînée après la séparation du catalyseur sont désactivés en ajoutant de l'eau.

8. Procédé selon l'une quelconque des revendications précédentes, **caractérisé en ce que** l'eau de lavage servant à la désactivation et/ou à l'extraction du catalyseur au cours du lavage du solvant est utilisée dans la solution entraînée de réaction.

9. Procédé selon l'une quelconque des revendications précédentes, **caractérisé en ce que** le polyisobutène est un polyisobutène hautement réactif d'un poids moléculaire moyen Mₙ allant de 500 à 5000 Dalton et d'une teneur en liaisons doubles en fin de chaîne de plus de 80 % en moles.
